# EUROPEAN PATENT SPECIFICATION

(11) **EP 2 533 572 B1**
(45) Date of publication and mention of the grant of the patent: **17.12.2014**
(21) Application number: 10845072.7
(22) Date of filing: 22.06.2010
(51) Int. Cl.: H04W 24/06, H04L 12/24, H04L 12/26

(54) **METHOD AND SYSTEM FOR TESTING OVER THE AIR PERFORMANCES IN MULTI-ANTENNA SYSTEM**
VERFAHREN UND SYSTEM ZUM TESTEN DER OTA-LEISTUNG IN EINEM MEHRANTENNENSYSTEM
PROCÉDÉ ET SYSTÈME PERMETTANT DE TESTER LES PERFORMANCES DES LIAISONS RADIO DANS UN SYSTÈME À ANTENNES MULTIPLES

(30) Priority: 05.02.2010 CN 201010112502
(43) Date of publication of application: 12.12.2012
(73) Proprietor: ZTE Corporation, Shenzhen, Guangdong 518057 (CN)
(72) Inventor: GUO, Yang, Shenzhen Guangdong 518057 (CN); ZHENG, Xinyu, Shenzhen Guangdong 518057 (CN); YU, Zhong, Shenzhen Guangdong 518057 (CN)
(74) Representative: Virdee-Crofts, Kulwinder Kaur
(86) International application number: PCT/CN2010/074277
(87) International publication number: WO 2011/094989

(56) References cited:
- WO-A1-00/31895
- WO-A1-2005/062646
- CN-A- 101 106 787
- CN-A- 101 399 621
- CN-A- 101 500 254
- US-A1- 2005 053 008

## Description

### Field of the Invention

The present invention relates to a technology of antenna testing, and in particular to a method and a system for testing an Over-The-Air (OTA) performance in a multi-antenna system.

### Background of the Invention

With the development of modern industry, each kind of radio communication product must possess good transmitting and receiving performances to guarantee the communication quality. Indexes for measuring the transmitting and receiving performances comprise a Total Radiated Power (TRP), a Total Radiated Sensitivity (TRS) and an Over The Air (OTA) performance. The TRP must be greater than a preset threshold to meet corresponding communication requirements, while the TRS needs to be lower than a preset threshold; when both the TRP and the TRS meet preset thresholds, the value of the TOA means that the test indexes are good.

In order to guarantee the normal use of a mobile terminal device in a network, the Cellular Telecommunications and Internet Association (CTIA) regulates a test standard for mobile terminal OTA performance, that is, "The test plan for mobile station OTA performance". At present, many operators require that the OTA performance of the mobile terminal entering their network is tested according to the CTIA standard requirement, and the TRP and the TRS need to meet certain requirements of value limit.

For a traditional single-antenna system and a mobile terminal thereof, the testing for indexes such as the TRP and the TRS is carried out in a traditional anechoic chamber. At present, since systems such as Long Term Evolution (LTE) come close to industrialization, the traditional single-antenna system and device would gradually transit to a communication device and a communication terminal adopting a Multiple Input Multiple Output (MIMO) multi-antenna technique. The traditional anechoic chamber can not perform corresponding communication performance evaluation of spatial performances for a multi-antenna terminal; it is needed to add a new device to the traditional anechoic chamber to form a new anechoic chamber before performing testing of related communication performances for a mobile terminal, so that the spatial performances of the MIMO system and the mobile terminal antenna can be evaluated. Regrettably, since the present multi-antenna system is at a research stage, there is no related testing system; and the related testing method remains at a theory stage. US2005053008 discloses testing wireless devices inserted into an isolation chamber with to filtered electrical signal paths for creating and receiving RF signals including circuits to reduce undesired RF signals.

### Summary of the Invention

In view of the problems above, the present invention provides a method and a system for testing an OTA performance in a multi-antenna system, which can perform testing of OTA performance indexes for a mobile terminal in the multi-antenna system, with easy implementation and low cost.

The technical solution of the present invention is realized as follows.

The present invention provides a method for testing an OTA performance in a multi-antenna system, wherein a testing device, which comprises a Base Station (BS) simulator, a channel emulator and an anechoic chamber, for testing is set, multiple test antennas are set in the anechoic chamber, wherein the test antennas are located on a circumference which takes a position of a Device Under Test (DUT) as a circle centre; the method comprises:
controlling the BS simulator to transmit a benchmark test signal to the DUT through the channel emulator and the test antennas; when determining that the benchmark test signal does not meet a set requirement, adjusting a signal output parameter of the BS simulator and the channel emulator until the benchmark test signal meets the set requirement;
determining corresponding test cases according to different channel models;
according to the channel models, the channel emulator performing channel simulation processing on a test signal output from the BS simulator and then sending the test signal to the DUT through the test antennas;
according to OTA performance test items corresponding to the test cases, testing each OTA performance after the DUT receives the test signal; or, after the DUT performs demodulation on the test signal, determining whether each OTA performance of the DUT reaches a standard according to a demodulation result; and
when the OTA performances corresponding to all test cases reach the standard, determining that the DUT reaches the standard; otherwise, determining that the DUT does not reach the standard.

Preferably, the test antennas are located on a circumference, which takes the position of the DUT as the circle centre, on a horizontal plane.

Preferably, the channel model is a Space Channel Model (SCM), or a Space Channel Model Extension (SCME), or the channel model defined by European future communication standards Winner I or Winner II.

Preferably, when the multiple antennas are polarized antennas, two polarized antennas orthogonal to each other are placed on a same antenna position.

Preferably, the polarized antenna comprises at least one of the following:
horizontal polarized antenna, vertical polarized antenna and crossed polarized antenna.

Preferably, the number of the multiple antennas is greater than or equal to the number of paths of the channel models.

The present invention also provides a system for testing an OTA performance in a multi-antenna system, comprising a setting unit, a first transmission unit, a first determination unit, an adjustment unit, a second determination unit, a channel emulation unit, a second transmission unit, a test unit and a third determination unit, wherein
the setting unit is configured to set multiple test antennas in an anechoic chamber of a testing device used for testing, wherein the test antennas are located on a circumference which takes a position of a DUT as a circle centre, the testing device comprises a BS simulator, a channel emulator and the anechoic chamber;
the first transmission unit is configured to transmit a benchmark test signal to the DUT;
the first determination unit is configured to trigger the adjustment unit when determining that the benchmark test signal does not meet a set requirement;
the adjustment unit is configured to adjust the benchmark test signal to make the benchmark test signal meet the set requirement;
the second determination unit is configured to determine corresponding test cases according to different channel models;
the channel emulation unit is configured to perform channel simulation processing on a test signal output from the BS simulator, according to the channel models;
the second transmission unit is configured to transmit the test signal processed by the channel emulation unit to the DUT;
the test unit is configured to: according to OTA performance test items corresponding to the test cases, test each OTA performance after the DUT receives the test signal; or, determine, after the DUT performs demodulation on the test signal, whether each OTA performance of the DUT reaches a standard according to a demodulation result; and
the third determination unit is configured to: when the OTA performances corresponding to all test cases reach a standard, determine that the DUT reaches the standard; otherwise, determine that the DUT does not reach the standard.

Preferably, the test antennas are located on a circumference, which takes the position of the DUT as the circle centre, on a horizontal plane.

Preferably, the channel model is an SCM, or an SCME, or the channel model defined by Winner I or Winner II.

Preferably, the number of the multiple antennas is greater than or equal to the number of paths of the channel models.

In the present invention, a plurality of test antennas are set in an anechoic chamber, corresponding test cases of the OTA performance are determined according to channel models, channel simulation is performed on a test signal and the test signal is sent to a DUT (mobile terminal) through the test antennas in the anechoic chamber, the DUT performs demodulation on the received radio signal or each OTA performance is tested after the DUT receives the test signal; and finally it is determined whether the OTA performance of the DUT reaches the standard according to the demodulation result or according to the result of direct testing. The present invention is easy to implement and has a low cost, and can perform testing of communication performance indexes for a DUT quickly and conveniently.

### Brief Description of the Drawings

Fig. 1 shows a structure diagram of a testing device used by a testing method in accordance with an embodiment of the present invention;
Fig. 2 shows a flowchart of a method for testing an OTA performance in a multi-antenna system in accordance with an embodiment of the present invention; and
Fig. 3 shows a structure diagram of a system for testing an OTA performance in a multi-antenna system in accordance with an embodiment of the present invention.

### Detailed Description of the Embodiments

For a better understanding of the technical solution and advantages of the present invention, embodiments are provided below to illustrate the present invention in further detail by reference to accompanying drawings.

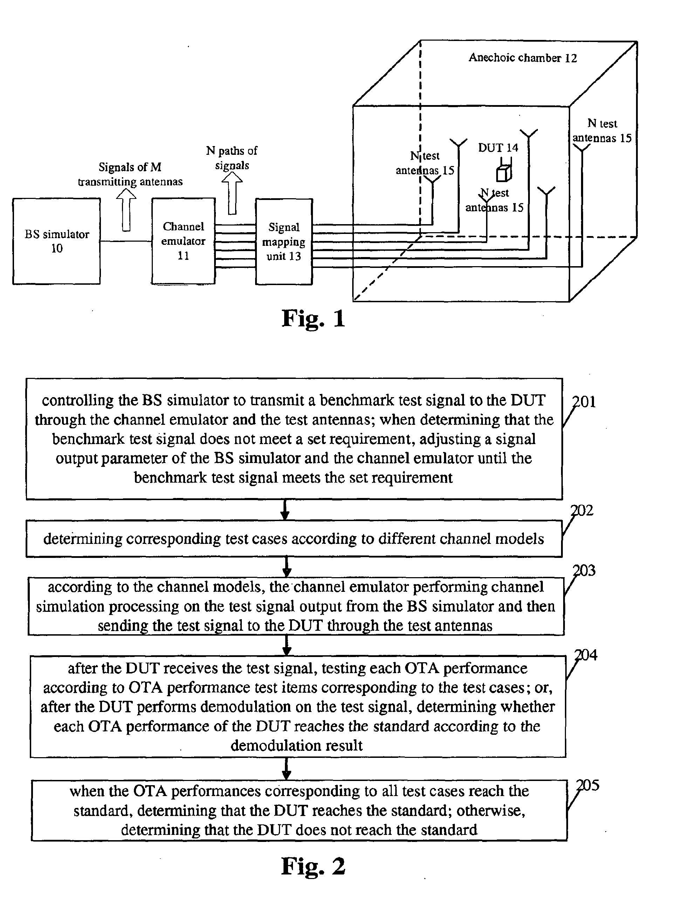

Fig. 1 shows a structure diagram of a testing device used by a testing method in accordance with an embodiment of the present invention. As shown in Fig. 1, the testing device used by the testing method in accordance with the embodiment of the present invention comprises a BS simulator 10, a channel emulator 11 and an anechoic chamber 12. Multiple (N) antennas (test antennas) 15 are set in the anechoic chamber 12, and all test antennas 15 are connected to the BS simulator 10, which is configured to provide a DUT 14 with radio signals (transmitted signals) of which the quantity is the same as that of the antennas, through the channel emulator 11. The test antennas 15 are located on a circumference which takes the DUT 14 as a circle centre. The test antennas 15 and the DUT 14 are located on the same plane. The optimal mode is that all test antennas are located on a horizontal plane; when the test antennas are located on a non-horizontal plane, the test effect is slightly worse. In this way, test signals on the test antennas 15 can reach the DUT 14 simultaneously.

In the embodiment of the present invention, the wall of the anechoic chamber 12 is made from an anechoic material. The anechoic chamber 12 is a small chamber with an enclosed space, wherein the enclosed space is used as the testing anechoic chamber and is not interfered by an external radio signal. For example, a metal cover is provided on the exterior surface of the anechoic material of the anechoic chamber 12 to avoid an existing external radio signal interfering with the signal in the enclosed space of the anechoic chamber 12. The anechoic material would basically absorb the radio signal reaching the anechoic wall of the anechoic chamber 12 completely, without generating signal reflection, thereby minimizing the signal interference on the DUT 14 when the DUT is subjected to OTA testing.

The embodiment of the present invention mainly aims at the testing of OTA performance of a DUT in a multi-antenna system; therefore, the channel emulator 11 specifically is an MIMO channel emulator, which can realize a simulation channel for a plurality of paths of radio signals to achieve the channel characteristic in an actual radio signal transmission. The channel emulator can be a commercially available channel emulator; since the channel emulator is not an implementation focus of the testing system of the embodiment of the present invention, no further description is needed here.

In the embodiment of the present invention, the BS simulator 10 can form a test sequence (test data used for testing) into a corresponding test signal through the BS simulator 10 itself, and output the test signal to the test antennas 15 in the anechoic chamber 12 through the MIMO channel emulator 11, thereby realizing the simulation of radio signals. The BS simulator also can be implemented through a commercially available simulator.

In the embodiment of the present invention, the channel emulator 11 performs channel simulation processing on the test signal output from the BS simulator 10 according to channel models and sends the test signal to the DUT 14 through the test antennas 15. These channel models comprise but are not limited to SCM, SCME and the channel model defined by Winner I or Winner II.

A tester can set the position of the test antennas 15 in the anechoic chamber 12 according to space attributes of the channel models; specifically, the tester arranges the test antennas 15 according to preset preferable angles.

As shown in Fig. 1, the testing device in accordance with an embodiment of the present invention further comprises: a signal mapping unit 13, configured to map radio signals output from the channel emulator 11 to corresponding antennas respectively.

The number of test antennas 15 in the anechoic chamber 12 is N, wherein N should be equal to or greater than the number of paths (main paths or clusters) of the used channel model. The test antennas 15 are located on a spherical surface which takes the DUT 14 as a centre of sphere. In this way, when respective test antennas 15 transmit radio signals simultaneously, these radio signals can be received by the DUT 14 simultaneously, thus the testing of the multi-antenna receiving performance of the DUT is guaranteed.

In the embodiment of the present invention, for SCM or SCME, the number of paths of the channel model is 6 or 8, thus the optimal number N of single-polarized test antennas is 6 or 8. For dual-polarized test antennas, two polarized antennas orthogonal to each other are configured on the same antenna position, wherein the polarization direction of the antenna comprises vertical polarization, horizontal polarization and 45-degree crossed polarization. When the test antennas are dual-polarized test antennas, the optimal value of the number N of needed test antennas should be 6x2 or 8x2, that is, 12 or 16. The number of test antennas in the anechoic chamber can be equal to but not limited to this optimal value. Specifically, the dual-polarized antennas in the embodiment of the present invention can be two antennas, with polarization direction orthogonal to each other, of a vertical polarized antenna or a horizontal polarized antenna or a crossed polarized (X polarized) antenna. In the embodiment of the present invention, in order to satisfy the testing of OTA performance in each channel model, the number of test antennas in the anechoic chamber 12 is set to be equal to or greater than the maximum number of test antennas needed in each channel model.

In the embodiment of the present invention, the DUT 14 can be arranged in the centre of the anechoic chamber 12; thus, it is convenient to distribute the test antennas 15 in the anechoic chamber 12. The shape of the anechoic chamber 12 is not limited to the shape shown in Fig. 1, but can be any shape with an enclosed space, for example, hemisphere.

In the embodiment of the present invention, the OTA performance comprises but is not limited to: throughput, TRP, TRS and bite error rate of information.

A multi-antenna testing method and a multi-antenna testing system based on the testing device shown in Fig. 1 are illustrated below respectively.

Fig. 2 shows a flowchart of a method for testing an OTA performance in a multi-antenna system in accordance with an embodiment of the present invention. As shown in Fig. 2, the method for testing the OTA performance in the multi-antenna system in accordance with the embodiment of the present invention performs testing based on the testing device shown in Fig. 1. The testing method in accordance with the embodiment of the present invention comprises the following steps:
Step 201: the BS simulator is controlled to transmit a benchmark test signal to the DUT through the channel emulator and the test antennas; when determining that the benchmark test signal does not meet a set requirement, a signal output parameter of the BS simulator and the channel emulator is adjusted until the benchmark test signal meets the set requirement.
Step 201 is mainly to calibrate the testing device using the benchmark test signal and examine whether the testing device satisfies the related requirements of testing. Specifically, the BS simulator transmits over the air the benchmark test signal to the DUT through the channel emulator and the test antennas; the DUT receives and demodulates the benchmark test signal. According to the demodulation result or by testing related OTA performance of the DUT receiving the benchmark test signal, it is determined whether the test signal received by the DUT is in an allowed range, if not, the signal output parameter of the BS simulator and the channel emulator is adjusted until the benchmark test signal is within the allowed range, thereby ensuring that the testing device shown in Fig. 1 meets the set requirements and can be adopted to perform testing of related OTA performance for the DUT. For the test indexes of different OTA performances, the benchmark test signals needed are different, for example, the benchmark test signal can be in a data mode of internally generated data pseudo-random pattern PN15. The specific OTA performance testing and the corresponding benchmark test signal are clearly specified in a related test protocol, and no further description is needed here. The testing device shown in Fig. 1 can be adopted to test a plurality of performance indexes. The allowed range mentioned above is set according to the test standard, different performance indexes correspond to different ranges; those skilled in the art should understand that it is easy to set the allowed range mentioned above according to related test standards.
Step 202: corresponding test cases are determined according to different channel models.

Specific test items of each OTA performance are determined according to the channel model currently stored in the testing device, thus corresponding test cases are determined. Step 202 determines the specific test items of the OTA performance for the DUT according to the current testing device.

Step 203: according to the channel models, the channel emulator performs channel simulation processing on the test signal output from the BS simulator and then sends the test signal to the DUT through the test antennas.

The channel emulator performs corresponding channel simulation on the test signal transmitted from the BS simulator according to the current channel model, that is, the channel emulator performs corresponding channel simulation on the test signal so as to simulate real communication channel environment. The test signal processed by the channel emulator is transmitted to the DUT through the corresponding test antenna.

Step 204: according to OTA performance test items corresponding to the test cases, after the DUT receives the test signal, each OTA performance is tested; or, after the DUT performs demodulation on the test signal, whether each OTA performance of the DUT reaches the standard is determined according to the demodulation result.

In Step 204, according to the OTA performance items to be tested corresponding to the specific test cases, according to the demodulation result of the test signal from the DUT or according to the result of direct testing of corresponding OTA performance from the DUT, it is determined whether the OTA performance satisfies a corresponding test index, and the test result is recorded, that is, whether each OTA performance to be tested of the DUT satisfies the testing requirements is recorded.

Step 205: when the OTA performances corresponding to all test cases reach the standard, it is determined that the DUT reaches the standard; otherwise, it is determined that the DUT does not reach the standard.

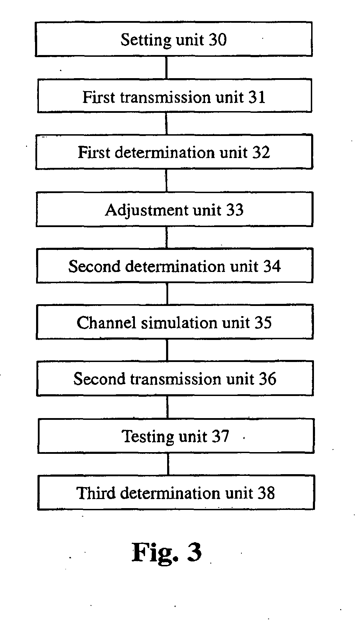

Fig. 3 shows a structure of a system for testing an OTA performance in a multi-antenna system in accordance with an embodiment of the present invention. As shown in Fig. 3, the system shown in Fig. 3 is based on the testing device shown in Fig. 1 and is a testing system designed according to the testing method shown in Fig. 2. The system for testing the OTA performance in the multi-antenna system in accordance with the embodiment of the present invention comprises a setting unit 30, a first transmission unit 31, a first determination unit 32, an adjustment unit 33, a second determination unit 34, a channel emulation unit 35, a second transmission unit 36, a test unit 37 and a third determination unit 38, wherein
the setting unit 30 is configured to set multiple test antennas in an anechoic chamber of a testing device used for testing, wherein the test antennas are located on a circumference which takes the position of a DUT as a circle centre, and the testing device comprises a BS simulator, a channel emulator and the anechoic chamber;
the first transmission unit 31 is configured to transmit a benchmark test signal to the DUT;
the first determination unit 32 is configured to trigger the adjustment unit 33 when determining that the benchmark test signal does not meet a set requirement;
the adjustment unit 33 is configured to adjust the benchmark test signal so that the benchmark test signal meets the set requirement;
the second determination unit 34 is configured to determine corresponding test cases according to different channel models;
the channel emulation unit 35 is configured to perform channel simulation processing on the test signal output from the BS simulator, according to the channel models;
the second transmission unit 36 is configured to transmit the test signal processed by the channel emulation unit 35 to the DUT;
the test unit 37 is configured to test, after the DUT receives the test signal, each OTA performance according to OTA performance test items corresponding to the test cases; or, determine, after the DUT performs demodulation on the test signal, whether each OTA performance of the DUT reaches the standard according to the demodulation result;
the third determination unit 38 is configured to: when the OTA performances corresponding to all test cases reach the standard, determine that the DUT reaches the standard; otherwise, determine that the DUT does not reach the standard.

In the testing system in accordance with the embodiment of the present invention, the test antennas are located on a circumference, which takes the position of the DUT as a circle centre, on a horizontal plane. The number of the multiple antennas above is greater than or equal to the number of paths of the channel models. The channel model is SCM, or SCME, or the channel model defined by Winner I or Winner II. When the multiple antennas are polarized antennas, two polarized antennas orthogonal to each other are placed on the same antenna position. The polarized antenna comprises at least one of the following: horizontal polarized antenna, vertical polarized antenna and crossed polarized antenna.

Those skilled in the art should understand that the system for testing the OTA performance in the multi-antenna system shown in Fig. 3 is designed for implementing the forgoing method for testing the OTA performance in the multi-antenna system. The function of each processing unit included in the system shown in Fig. 3 can be understood by reference to the related description in the forgoing method. The function of each processing unit can be implemented by a program running on a processor, or can be implemented by a corresponding logic circuit.

The above are only the preferable embodiments of the present invention, and are not intended to limit the scope of protection of the present invention.

## Claims

1. A method for testing an Over-The-Air, OTA, performance in a multi-antenna system, wherein a testing device, which comprises a Base Station, BS, simulator (10), a channel emulator (11) and an anechoic chamber (12), for testing is set, **characterized in that** multiple test antennas (15) are set in the anechoic chamber (12), wherein the test antennas (15) are located on a circumference which takes a position of a Device Under Test, DUT, (14) as a circle centre; the method comprises:
controlling the BS simulator (10) to transmit a benchmark test signal to the DUT through the channel emulator (11) and the test antennas (15); when determining that the benchmark test signal does not meet a set requirement, adjusting a signal output parameter of the BS simulator (10) and the channel emulator (11) until the benchmark test signal meets the set requirement;
determining corresponding test cases according to different channel models;
according to the channel models, the channel emulator (11) performing channel simulation processing on a test signal output from the BS simulator (10) and then sending the test signal to the DUT (14) through the test antennas (15);
after the DUT (14) receives the test signal, testing each OTA performance according to OTA performance test items corresponding to the test cases; or, after the DUT (14) performs demodulation on the test signal, determining whether each OTA performance of the DUT (14) reaches a standard according to a demodulation result; and
when the OTA performances corresponding to all test cases reach the standard, determining that the DUT (14) reaches the standard; otherwise, determining that the DUT (14) does not reach the standard.

2. The testing method according to claim 1, **characterized in that** the test antennas are located on a circumference, which takes the position of the DUT as the circle centre, on a horizontal plane.

3. The testing method according to claim 1, **characterized in that** the channel model is a Space Channel Model, SCM, or a Space Channel Model Extension, SCME, or the channel model defined by European future communication standards Winner I or Winner II.

4. The testing method according to claim 1, **characterized in that** when the multiple antennas are polarized antennas, two polarized antennas orthogonal to each other are placed on a same antenna position.

5. The testing method according to claim 4, **characterized in that** the polarized antenna comprises at least one of the following:
horizontal polarized antenna, vertical polarized antenna and crossed polarized antenna.

6. The testing method according to claim 1, **characterized in that** the number of the multiple antennas is greater than or equal to the number of paths of the channel models.

7. A system for testing an OTA performance in a multi-antenna system, **characterized by** comprising a setting unit (30), a first transmission unit (31), a first determination unit (32), an adjustment unit (33), a second determination unit (34), a channel emulation unit (35), a second transmission unit (36), a test unit (37) and a third determination unit (38), wherein
the setting unit (30) is configured to set multiple test antennas (15) in an anechoic chamber (12) of a testing device used for testing, wherein the test antennas (15) are located on a circumference which takes a position of a DUT (14) as a circle centre, the testing device comprises a BS simulator (10), a channel emulator (11) and the anechoic chamber (12);
the first transmission unit (31) is configured to transmit a benchmark test signal to the DUT (14);
the first determination unit (32) is configured to trigger the adjustment unit (33) when determining that the benchmark test signal does not meet a set requirement;
the adjustment unit (33) is configured to adjust the benchmark test signal to make the benchmark test signal meet the set requirement;
the second determination unit (34) is configured to determine corresponding test cases according to different channel models;
the channel emulation unit (35) is configured to perform channel simulation processing on a test signal output from the BS simulator (10), according to the channel models;
the second transmission unit (36) is configured to transmit the test signal processed by the channel emulation unit to the DUT (14);
the test unit (37) is configured to: test, after the DUT (14) receives the test signal, each OTA performance according to OTA performance test items corresponding to the test cases; or, determine, after the DUT (14) performs demodulation on the test signal, whether each OTA performance of the DUT (14) reaches a standard according to a demodulation result; and
the third determination unit (38) is configured to: when the OTA performances corresponding to all test cases reach a standard, determine that the DUT (14) reaches the standard; otherwise, determine that the DUT (14) does not reach the standard.

8. The testing system according to claim 7, **characterized in that** the test antennas are located on a circumference, which takes the position of the DUT as the circle centre, on a horizontal plane.

9. The testing system according to claim 7, **characterized in that** the channel model is an SCM, or an SCME, or the channel model defined by Winner I or Winner II.

10. The testing system according to any one of claims 7 to 9, **characterized in that** the number of the multiple antennas is greater than or equal to the number of paths of the channel models.

## Patentansprüche

1. Verfahren zum Testen einer Over-The-Air-Leistung-OTA-Leistung - in einem Mehrantennensystem, wobei eine Testvorrichtung, die einen Basisstationssimulator - BS-Simulator - (10), einen Kanalemulator (11) und einen reflexionsfreien Raum (12) umfasst, zum Testen eingerichtet wird, **dadurch gekennzeichnet, dass** mehrere Testantennen (15) in dem reflexionsfreien Raum (12) eingerichtet werden, wobei die Testantennen (15) sich auf einem Kreisumfang befinden, der eine Position eines Messobjekts - DUT (Device Under Test) - (14) als eine Kreismitte einnimmt; wobei das Verfahren Folgendes umfasst:
Steuern des BS-Simulators (10) dahingehend, ein Bewertungstestsignal durch den Kanalemulator (11) und die Testantennen (15) an das DUT zu übertragen; wenn bestimmt wird, dass das Bewertungstestsignal eine Sollanforderung nicht erfüllt, Justieren eines Signalausgabeparameters des BS-Simulators (10) und des Kanalemulators (11), bis das Bewertungstestsignal die Sollanforderung erfüllt;
Bestimmen entsprechender Testfälle gemäß verschiedenen Kanalmodellen;
gemäß den Kanalmodellen Durchführen einer Kanalsimulationsverarbeitung an einem von dem BS-Simulator (10) ausgegebenen Testsignal durch den Kanalemulator (11) und dann Senden des Testsignals durch die Testantennen (15) an das DUT (14);
nachdem das DUT (14) das Testsignal empfangen hat, Testen jeder OTA-Leistung gemäß OTA-Leistungstestelementen, die den Testfällen entsprechen; oder nachdem das DUT (14) eine Demodulation an dem Testsignal durchgeführt hat, Bestimmen, ob jede OTA-Leistung des DUT (14) einen Standard gemäß einem Demodulationsergebnis erreicht; und
wenn die OTA-Leistungen, die allen Testfällen entsprechen, den Standard erreichen, Bestimmen, dass das DUT (14) den Standard erreicht; andernfalls Bestimmen, dass das DUT (14) den Standard nicht erreicht.

2. Testverfahren nach Anspruch 1, **dadurch gekennzeichnet, dass** die Testantennen sich auf einem Kreisumfang, der die Position des DUT als die Kreismitte annimmt, auf einer horizontalen Ebene befinden.

3. Testverfahren nach Anspruch 1, **dadurch gekennzeichnet, dass** das Kanalmodell ein Raum-Kanalmodell-SCM (Space Channel Model) - oder eine Raum-Kanalmodellerweiterung - SCME (Space Channel Model Extension) - oder das von den europäischen künftigen Kommunikationsstandards Winner I oder Winner II definierte Kanalmodell ist.

4. Testverfahren nach Anspruch 1, **dadurch gekennzeichnet, dass**, wenn die mehreren Antennen polarisierte Antennen sind, zwei polarisierte Antennen, die zueinander orthogonal sind, auf derselben Antennenposition angeordnet werden.

5. Testverfahren nach Anspruch 4, **dadurch gekennzeichnet, dass** die polarisierte Antenne mindestens eine der folgenden umfasst:
eine horizontal polarisierte Antenne, vertikal polarisierte Antenne und kreuzpolarisierte Antenne.

6. Testverfahren nach Anspruch 1, **dadurch gekennzeichnet, dass** die Anzahl der mehreren Antennen größer gleich der Anzahl von Pfaden der Kanalmodelle ist.

7. System zum Testen einer OTA-Leistung in einem Mehrantennensystem, **dadurch gekennzeichnet, dass** es eine Einrichtungseinheit (30), eine erste Übertragungseinheit (31), eine erste Bestimmungseinheit (32), eine Justierungseinheit (33), eine zweite Bestimmungseinheit (34), eine Kanalemulationseinheit (35), eine zweite Übertragungseinheit (36), eine Testeinheit (37) und eine dritte Bestimmungseinheit (38) umfasst, wobei
die Einrichtungseinheit (30) dazu konfiguriert ist, mehrere Testantennen (15) in einem reflexionsfreien Raum (12) einer zum Testen verwendeten Testvorrichtung einzurichten, wobei die Testantennen (15) sich auf einem Kreisumfang befinden, der eine Position eines DUT (14) als eine Kreismitte einnimmt, wobei die Testvorrichtung einen BS-Simulator (10), einen Kanalemulator (11) und den reflexionsfreien Raum (12) umfasst;
die erste Übertragungseinheit (31) dazu konfiguriert ist, ein Bewertungstestsignal an das DUT (14) zu übertragen;
die erste Bestimmungseinheit (32) dazu konfiguriert ist, die Justierungseinheit (33) auszulösen, wenn bestimmt wird, dass das Bewertungstestsignal eine Sollanforderung nicht erfüllt;
die Justierungseinheit (33) dazu konfiguriert ist, das Bewertungstestsignal zu justieren, um zu bewirken, dass das Bewertungstestsignal die Sollanforderung erfüllt;
die zweite Bestimmungseinheit (34) dazu konfiguriert ist, entsprechende Testfälle gemäß verschiedenen Kanalmodellen zu bestimmen;
die Kanalemulationseinheit (35) dazu konfiguriert ist, eine Kanalsimulationsverarbeitung an einem von dem BS-Simulator (10) ausgegebenen Testsignal gemäß den Kanalmodellen durchzuführen;
die zweite Übertragungseinheit (36) dazu konfiguriert ist, das von der Kanalemulationseinheit verarbeitete Testsignal an das DUT (14) zu übertragen;
die Testeinheit (37) zu Folgendem konfiguriert ist: Testen, nachdem das DUT (14) das Testsignal empfangen hat, jeder OTA-Leistung gemäß OTA-Leistungstestelementen, die den Testfällen entsprechen; oder Bestimmen, nachdem das DUT (14) eine Demodulation an dem Testsignal durchgeführt hat, ob jede OTA-Leistung des DUT (14) einen Standard gemäß einem Demodulationsergebnis erreicht; und
die dritte Bestimmungseinheit (38) zu Folgendem konfiguriert ist: wenn die OTA-Leistungen, die allen Testfällen entsprechen, einen Standard erreichen, Bestimmen, dass das DUT (14) den Standard erreicht; andernfalls Bestimmen, dass das DUT (14) den Standard nicht erreicht.

8. Testsystem nach Anspruch 7, **dadurch gekennzeichnet, dass** die Testantennen sich auf einem Kreisumfang, der die Position des DUT als die Kreismitte annimmt, auf einer horizontalen Ebene befinden.

9. Testsystem nach Anspruch 7, **dadurch gekennzeichnet, dass** das Kanalmodell ein SCM oder SCME oder das von Winner I oder Winner II definierte Kanalmodell ist.

10. Testsystem nach einem der Ansprüche 7 bis 9, **dadurch gekennzeichnet, dass** die Anzahl der mehreren Antennen größer gleich der Anzahl von Pfaden der Kanalmodelle ist.

## Revendications

1. Procédé de test de performance OTA (over-the-air - par liaison radio) dans un système équipé de multiples antennes, dans lequel un dispositif de test, qui comporte un simulateur BS (base station - station de base) (10), un émulateur de canal (11) et une chambre anéchoïque (12), à des fins de test, est mis en oeuvre, **caractérisé en ce que** de multiples antennes de test (15) sont mises en oeuvre dans la chambre anéchoïque (12), dans lequel les antennes de test (15) sont positionnées sur une circonférence qui prend une position d'un DUT (device under test - dispositif en cours de test) (14) pour son centre de cercle ; le procédé comportant :
l'étape consistant à commander le simulateur BS (10) à des fins de transmission d'un signal de test d'évaluation des performances au DUT par le biais de l'émulateur de canal (11) et des antennes de test (15) ; quand il est déterminé que le signal de test d'évaluation des performances ne satisfait pas à une exigence prédéterminée, l'étape consistant à ajuster un paramètre de sortie de signal du simulateur BS (10) et de l'émulateur de canal (11) jusqu'à ce que le signal de test d'évaluation des performances satisfasse à l'exigence prédéterminée ;
l'étape consistant à déterminer des cas de test correspondants en fonction de différents modèles de canal ;
en fonction des modèles de canal, l'étape consistant, au moyen de l'émulateur de canal (11), à effectuer un processus de simulation de canal sur un signal de test émis en provenance du simulateur BS (10) puis à envoyer le signal de test au DUT (14) par le biais des antennes de test (15) ;
une fois que le DUT (14) a reçu le signal de test, l'étape consistant à tester chaque performance OTA en fonction d'éléments de test de performance OTA qui correspondent aux cas de test ; ou, une fois que le DUT (14) a effectué une démodulation sur le signal de test, l'étape consistant à déterminer si chaque performance OTA du DUT (14) a atteint un niveau requis en fonction d'un résultat de démodulation ; et
quand les performances OTA qui correspondent à tous les cas de test ont atteint le niveau requis, l'étape consistant à déterminer que le DUT (14) a atteint le niveau requis ; sinon, l'étape consistant à déterminer que le DUT (14) n'a pas atteint le niveau requis.

2. Procédé de test selon la revendication 1, **caractérisé en ce que** les antennes de test sont positionnées sur une circonférence, qui prend la position du DUT pour son centre de cercle, sur un plan horizontal.

3. Procédé de test selon la revendication 1, **caractérisé en ce que** le modèle de canal est un modèle SCM (space channel model - modèle de canal spatial), ou un modèle SCME (space channel model extension - extension de modèle de canal spatial), ou le modèle de canal défini par les projets européens en matière de communication du futur Winner 1 ou Winner II.

4. Procédé de test selon la revendication 1, **caractérisé en ce que**, quand les multiples antennes sont des antennes polarisées, deux antennes polarisées perpendiculaires l'une par rapport à l'autre sont placées sur une même position d'antenne.

5. Procédé de test selon la revendication 4, **caractérisé en ce que** l'antenne polarisée comporte au moins l'une parmi les suivantes :
une antenne polarisée horizontale, une antenne polarisée verticale et une antenne polarisée croisée.

6. Procédé de test selon la revendication 1, **caractérisé en ce que** le nombre des multiples antennes est supérieur ou égal au nombre de trajectoires des modèles de canal.

7. Système de test d'une performance OTA dans un système équipé de multiples antennes, **caractérisé en ce qu'**il comporte une unité de mise en oeuvre (30), une première unité de transmission (31), une première unité de détermination (32), une unité d'ajustement (33), une deuxième unité de détermination (34), une unité d'émulation de canal (35), une deuxième unité de transmission (36), une unité de test (37) et une troisième unité de détermination (38), dans lequel
l'unité de mise en oeuvre (30) est configurée pour mettre en oeuvre de multiples antennes de test (15) dans une chambre anéchoïque (12) d'un dispositif de test servant à tester, dans lequel les antennes de test (15) sont positionnées sur une circonférence qui prend une position d'un DUT (14) pour son centre de cercle, le dispositif de test comporte un simulateur BS (10), un émulateur de canal (11) et la chambre anéchoïque (12) ;
la première unité de transmission (31) est configurée pour transmettre un signal de test d'évaluation des performances au DUT (14) ;
la première unité de détermination (32) est configurée pour déclencher l'unité d'ajustement (33) quand il est déterminé que le signal de test d'évaluation des performances ne satisfait pas à une exigence prédéterminée ;
l'unité d'ajustement (33) est configurée pour ajuster le signal de test d'évaluation des performances pour que le signal de test d'évaluation des performances satisfasse à l'exigence prédéterminée ;
la deuxième unité de détermination (34) est configurée pour déterminer des cas de test correspondants en fonction de différents modèles de canal ;
l'unité d'émulation de canal (35) est configurée pour effectuer un processus de simulation de canal sur un signal de test émis en provenance du simulateur BS (10), en fonction des modèles de canal ;
la deuxième unité de transmission (36) est configurée pour transmettre le signal de test traité par l'unité d'émulation de canal au DUT (14) ;
l'unité de test (37) est configurée pour : tester, une fois que le DUT (14) a reçu le signal de test, chaque performance OTA en fonction d'éléments de test de performance OTA qui correspondent aux cas de test ; ou, déterminer, une fois que le DUT (14) a effectué une démodulation sur le signal de test, si chaque performance OTA du DUT (14) a atteint un niveau requis en fonction d'un résultat de démodulation ; et
la troisième unité de détermination (38) est configurée pour : quand les performances OTA qui correspondent à tous les cas de test ont atteint un niveau requis, déterminer que le DUT (14) a atteint le niveau requis ; sinon, déterminer que le DUT (14) n'a pas atteint le niveau requis.

8. Système de test selon la revendication 7, **caractérisé en ce que** les antennes de test sont positionnées sur une circonférence, qui prend la position du DUT pour son centre de cercle, sur un plan horizontal.

9. Système de test selon la revendication 7, **caractérisé en ce que** le modèle de canal est un modèle SCM, ou un modèle SCME, ou le modèle de canal défini par les projets Winner I ou Winner II.

10. Système de test selon l'une quelconque des revendications 7 à 9, **caractérisé en ce que** le nombre des multiples antennes est supérieur ou égal au nombre de trajectoires des modèles de canal.
